Europäisches Patentamt

European Patent Office

Office européen des brevets

(11) Publication number: **0 366 201**
**A1**

# EUROPEAN PATENT APPLICATION

(21) Application number: **89202677.4**

(51) Int. Cl.⁵: **B60R 25/04**

(22) Date of filing: **23.10.89**

(30) Priority: **24.10.88 NL 8802607**

(43) Date of publication of application:
**02.05.90 Bulletin 90/18**

(84) Designated Contracting States:
**AT BE CH DE ES FR GB GR IT LI LU NL SE**

(71) Applicant: **Oostveen, Antoon Jacobus**
**Duivenkamp 267**
**NL-3607 AM Maarssenbroek Maarssen(NL)**

Applicant: **Loermans, Johannes Hendrikus**
**Nieuwlichtstraat 16**
**NL-3552 GX Utrecht(NL)**

(72) Inventor: **Oostveen, Antoon Jacobus**
**Duivenkamp 267**
**NL-3607 AM Maarssenbroek Maarssen(NL)**
Inventor: **Loermans, Johannes Hendrikus**
**Nieuwlichtstraat 16**
**NL-3552 GX Utrecht(NL)**

(74) Representative: **de Bruijn, Leendert C. et al**
**Nederlandsch Octrooibureau**
**Scheveningseweg 82 P.O. Box 29720**
**NL-2502 LS 's-Gravenhage(NL)**

(54) **Theft protection device.**

(57) Theft protection device for motor vehicles comprising a cassette (5) which can be introduced in a casing (4). The cassette comprises some components (15) forming part of the motor vehicle electrical circuitry. Means (6-9) are provided to lock the cassette in its position and to prevent inserting of the cassette without engaging the lock means.

fig-2

## Theft protection device

The invention relates to a theft protection device for motor vehicles to be mounted in the driver cabine, comprising means for interrupting of at least one electric circuit, removable from a casing. Such a device is known from FR-A-2,293,341. In this specification an electronic ignition circuit is disclosed wherein the print board can be removed from a casing. By removing this print board unauthorized driving away of the vehicle is prevented. Although this device may be useful on small scale it does not give any protection if such an antitheft device is used on larger scale because a person wanting to steel a vehicle and being familiar with such a device can easy take measures to short circuit the several connections. The drawback of this device is that it is not possible to obtain protection being different for different motor vehicles. It does not seem to be appropriate to differ the printing board between several vehicles.

The invention aims to provide a theft protection device in which a uniform electric circuit can be used, however, with means to guarantee that such a free available electrical circuit can only be introduced in the casing by authorized persons.

This aim is realized in that the means for interrupting of the electric circuit comprise a cassette having members to be engageable with the casing, the casing being provided with lock means for latching engagement of said members. By using lock means engaging the cassette in which the electric circuit is comprised for starting and driving of a motor vehicle both an appropriate key (or code) and a cassette are needed. If either one of them is not available it is not possible to drive away. Destroying the lock without having a cassette will not result in connection of the electric circuits and simply inserting of a general available cassette is prevented by the lock means. The electric circuitry can comprise a print board having components of the ignition to either control the low voltage or the high voltage, injection or voltage regulation of the vehicle. It can also comprise parts of the circuit to start an engine or fuses. According to a preferred embodiment of the invention said members comprise a recess. By actuating the lock a pin will protrude in the space for the cassette. If the pin is retracted the cassette can be introduced in the casing and after introducing of the pin in the recess of the cassette the cassette is locked. If the lock comprises a key-lock after removing of the key the cassette cannot be removed. If both the keys and cassette are removed it is not possible to fully introduce a full cassette because of the protruding pin of the lock.

According to a preferred further embodiment the cassette comprises individualizing means and the casing is provided with means to recognize said individualizing means. Although each cassette substantially contains a uniform electric circuitry simple means are provided to individualize the cassette, so that it is only possible to use a special cassette for one vehicle. The means described above can comprise the magnetic storage of data at one side of the cassette. In such a case the casing can be provided with a reading head to read the data stored on the magnetic carrier. E.g. this reading head can be connected with a further circuitry to activate the motor vehicle.

The invention will be further described referring to prefered embodiments shown in the drawing, wherein:

Fig. 1 shows in plan view the position of the device according to the invention.

Fig. 2 shows partly in exploded view more detailed the device according to the invention.

Fig. 3 shows a front elevation the device according to the invention and

fig. 4 shows schematically a part of an electric circuit of a motor vehicle provided with the device according to the invention.

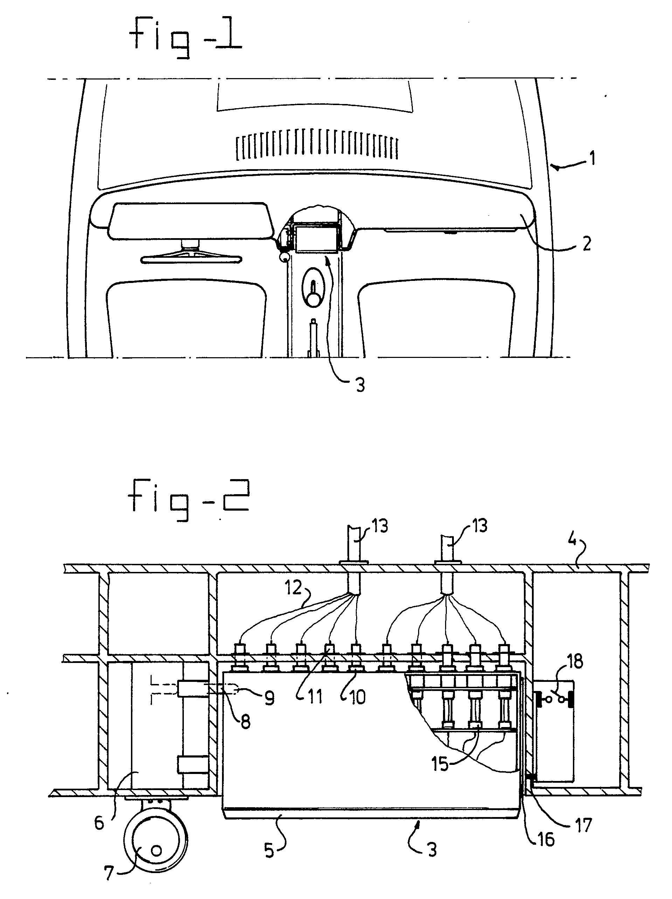

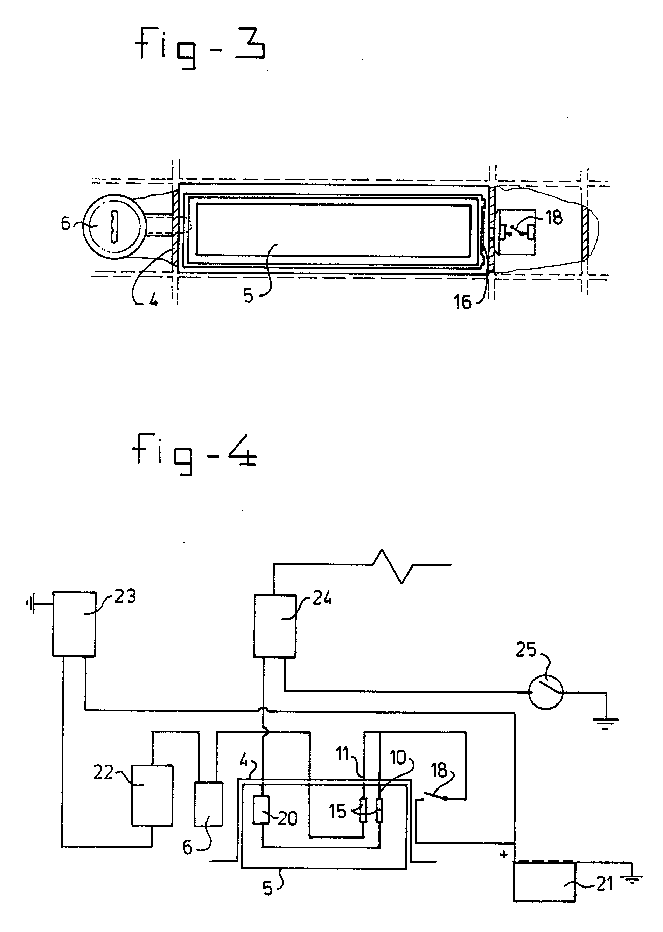

In fig. 1 a part of a motor vehicle, generally indicated with 1, is shown, in the instrument panel 2 of which the device according to the invention, generally indicated with 3, is provided. Fig. 2 shows partly exploded more detailed an area around the device 3. Theft protection device 3 comprises a casing 4 and a removable cassette 5. Casing 4 has a lock 6 in which a key 7 can be inserted. By rotating of key 7 pin 8 is moved to-and-fro. Cassette 5 is provided with a recess 9. At the rearside of the cassette sockets 10 are provided to receive pins 11 electrically connected with wires 12 of the wiring strands 13 of the motor vehicle. By having the casing provided with sockets it is prevented that the electric connections of it become damaged during the period of removal of the cassette. As is clear from figure 2 fuses 15 are provided inside of cassette 5. By having fuses 15 in cassette 15 it is very easy to change them in case of failure.At its left side cassette 5 is provided with a magnetic strip 16 on which data can be stored. Casing 4 is provided with reading head 17 connected to a electric circuit comprising a switch 18. Fig. 3 shows the device according to fig. 2 in front elevation. Casing 4 is a rigid housing e.g. from steel and the electrical connections can after mounting of the casing only be reached from the rear side of the casing so that it is impossible for an unauthorized person to make any connections from the front side of the car within a reasonable time.

The device shown in figures 1-3 functions as follows:

Having pin 8 of lock 3 retracted by rotating key 7 cassette 5 can be introduced in casing 4 so that electrically contact is provided between sockets 10 and pins 11. During inserting of cassette magnetic strip 16 moves along reading head 17. Reading head 17 will compare the data from magnetic strip 16 with its own memory and if it reveals that the cassette does correspond with said data switch 18 will be closed. By rotating key 7 pin 8 will be introduced in recess 9 of cassette 5. Lock 6 can also be connected with further switch means (not shown) to start the engine so that one is obliged to lock cassette 5 in casing 4. When removing key 7 it is not possible to remove cassette 5. If lock 6 is actuated to retract pin 8 cassette 5 can be removed. when cassette 5 moves out of casing 4 switch 18 is again actuated by reading head 17 or in any other (automatic) way. Key 7 can only be removed if pin 8 does extend in the spacing for cassette 5. This means that when key 7 is removed and no cassette is present in casing is it is not possible to insert a new cassette. Instead of lock 6 an electro-mechanic device can be used such that key 7 can be replaced by a magnetic/code key.

In fig. 4 a part of a wiring diagram of a motor vehicle is shown. In cassestte 5 fuses 15 are provided as well as an electronic circuitry 20. The battery of the car is indicated with 21 whilst the starter switch is referred to with 22. This starter switch can be coupled to lock 6. The starter engine of the motor vehicle is indicated with 23 whilst the ignition coil has reference 24. The car is also provided with a distributor 25. If cassette 5 is inserted in casing 4 as described above, through reading head 7 switch 18 will close providing a tension on pins 11 and through the connection with sockets 10 to fuses 15. Through fuses 15 a part of the current flows to starter switch 22 to be able to actuate starter engine 23. A further part goes to electric circuitry 20 connected to ignition coil 24. Circuitry 20 can be an electronic ignition system.

It has to be understood that the device described above is only an example of many embodiments which can be conceived. E.g. it is possible that the cassette does comprise other electrically means, such as parts of an injection device.

## Claims

1. Theft protection device for motor vehicles to be mounted in the driver cabine, comprising means for interrupting of at least one electric circuit, removable from a casing, characterized in that, the means for interrupting of the electric circuit comprise a cassette having members to be engageable with the casing, the casing being provided with lock means for latching engagement of said members.

2. Theft protection device according to claim 1, wherein said members comprise a recess.

3. Theft protection device according to one of the preceding claims, wherein the cassette is provided with individualizing means, and the casing is provided to recognize these individualizing means.

4. Theft protection device according to claim 3, wherein said individualizing means comprise magnetically stored data provided at one side of the cassette and wherein the casing is provided with a reading head.

3

fig-1

fig-2

fig-3

fig-4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3 915 542 (SCHOU-KJELDSEN) <br> * Figures 2-5; column 3, line 32 - column 4, line 44 * <br> --- | 1-3 | B 60 R 25/04 |
| Y | DE-U-8 716 260 (KLOS) <br> * Figure 3; claims 1,2,6 * <br> --- | 1-3 | |
| D,A | FR-A-2 293 341 (MAGARIAN) <br> * Page 1, line 35 - page 3, line 12; figures * <br> --- | 1,3 | |
| A | DE-A-3 447 033 (BERENDES) <br> * Abstract; page 2, line 31 - page 3, line 7 * <br> --- | 1,3,4 | |
| A | FR-A-2 365 035 (SZONDY LAKATOS ES SZERELO IPARI SZOVETKEZET) <br> * Claims 1,2 * <br> --- | 1,3 | |
| A | EP-A-0 075 078 (YANO) <br> * Whole document * <br> --- | 1,3,4 | TECHNICAL FIELDS SEARCHED (Int. Cl.5) |
| P,A | EP-A-0 312 456 (ROLLAND) <br> * Column 1, line 25 - column 2, line 9; column 3, lines 17-24; column 10, lines 44-48; figures 1,2 * <br> ----- | 1,3,4 | B 60 R |

The present search report has been drawn up for all claims

| Place of search | Date of completion of the search | Examiner |
|---|---|---|
| THE HAGUE | 30-01-1990 | DUBOIS B.F.J. |